# EUROPÄISCHE PATENTANMELDUNG

(11) **EP 4 219 137 A1**
(43) Veröffentlichungstag der Anmeldung: **02.08.2023**
(21) Anmeldenummer: 23153163.3
(22) Anmeldetag: 24.01.2023
(51) Int. Cl.: B29D 30/30, B29C 70/32, B29C 70/54, D04H 3/04, D04H 3/045, B29C 70/36, D04B 21/16, D04B 23/10, D04B 23/12

(54) **VERFAHREN UND VORRICHTUNG ZUR HERSTELLUNG EINES RINGFÖRMIGEN MULTIAXIALEN FADENGELEGES SOWIE EIN DAMIT HERGESTELLTER RINGFÖRMIGER GEGENSTAND**

(30) Priorität: 28.01.2022 US 202217649231
(71) Anmelder: KARL MAYER Technische Textilien GmbH, 09117 Chemnitz (DE); The Goodyear Tire & Rubber Company, Akron, OH 44316 (US)
(72) Erfinder: Rotter, Peter, 95233 Helmbrechts (DE); Glöckner, René, 09599 Freiberg (DE); Rickmann, Mike, 08523 Plauen (DE); Tröltzsch, Jürgen, 09113 Chemnitz (DE); Sportelli, Francesco, 3249 Bettembourg (LU); Boes, Claude Ernest Félix, 9147 Erpeldange-sur-Sûre (LU); Wilms, Stefan, 7373 Helmdange (LU); Mersch, Romain Jack Rodolphe, 57570 Boust (FR); Lettieri, Joseph Carmine, Hudson, 44236 (US); Losey, Robert Allen, Kent, 44240 (US); Downing, Daniel Ray, Uniontown, 44685 (US)
(74) Vertreter: Findeisen Neumann Scheit Partnerschaft mbB

(57) **Zusammenfassung**

Die Erfindung betrifft ein Verfahren und eine Vorrichtung zur Herstellung eines ringförmigen multiaxialen Fadengeleges sowie einen damit hergestellten ringförmigen Gegenstand. Aufgabe der Erfindung ist es daher, ein Verfahren und eine Vorrichtung zur Bildung eines multiaxialen Fadengeleges für ringförmige Strukturen zu schaffen, welches keine Verwindung oder Verschiebung der Fadenlagen aufweist. Weiterhin soll zur Bildung eines geschlossenen Rings des multiaxialen Fadengeleges das separate Schließen einer Stoßoder Überlappstelle entfallen. Diese Aufgabe wird dadurch gelöst, dass zumindest eine untere Fadenlage (2a) und eine obere Fadenlage in Form einer endlosen Fadenschar oder eines endlosen Einzelfadens oder in Form von Fadenscharabschnitten oder Einzelfadenabschnitten vollumfänglich auf zwei beabstandet angeordnete Ringelemente (3) mit sich unterscheidenden Fadenausrichtungen abgelegt werden und die erste und obere Fadenlage (2a, 2b) anschließend punktuell miteinander fixiert werden.

## Beschreibung

Die Erfindung betrifft ein Verfahren und eine Vorrichtung zur Herstellung eines ringförmigen multiaxialen Fadengeleges sowie einen damit hergestellten ringförmigen Gegenstand.

Multiaxiale Fadengelege werden insbesondere bei der Herstellung von Faserverbundwerkstoffen eingesetzt. Hierbei werden diese multiaxialen Fadengelege als Verstärkung in eine polymere Matrix eingebunden, wobei die polymere Matrix beispielsweise aus Polyester- oder Epoxidharz bestehen kann. Zur Bildung eines multiaxialen Fadengeleges werden parallele Fäden in zumindest einer unteren Fadenlage und einer oberen Fadenlage übereinander gelegt, wobei sich die Ausrichtung der Fäden in der unteren Fadenlage von der Ausrichtung der Fäden in der oberen Fadenlage unterscheidet. Nach dem Übereinanderlegen der beiden Fadenlagen werden die Fäden der unteren Fadenlage und die Fäden der oberen Fadenlage punktuell miteinander verbunden. Die Fäden können beispielswiese miteinander verwirkt, verklammert oder auch thermisch verbunden werden. Unter "Faden" wird nachfolgend ein linienförmiges Erzeugnis mit textilem Charakter, wie z.B. Garn, Filament oder Bändchen, verstanden. Die Fäden der Fadengelege können beispielsweise aus Kohlenstoff, Glas oder Keramik bestehen. Weiterhin kommen auch Synthesefasern wie beispielsweise Aramidfasern oder Polyamidfasern zum Einsatz.

Aus DE 197 26 831 C5 ist eine Multiaxialmaschine zur Bildung eines multiaxialen Fadengeleges bekannt. Diese Multiaxialmaschine weist zwei im Abstand voneinander befindliche langgestreckte und mit Fixierelementen ausgebildete Transportelemente auf, deren Transportrichtung in der Längsrichtung des entstehenden multiaxialen Fadengeleges verläuft. Die Transportelemente sind hier als angetriebene Transportketten ausgeführt. Mit einem ersten an einem Zufuhrportal quer zur Transportrichtung der Transportketten geführten Fadenleger wird zunächst eine untere Fadenlage in Form einer endlosen Fadenschar auf den Transportketten abgelegt, wobei die abgelegte Fadenschar dabei um an den Transportketten angebrachten Nadel-, Stift- oder Hakenreihen (Fixierelemente) herumgelegt wird. Das Zufuhrportal ist entlang der Bewegungsrichtung der Transportketten mit einstellbarer Geschwindigkeit bewegbar. Ebenso ist auch die Geschwindigkeit des am Zufuhrportal geführten Fadenlegers einstellbar. Über das Zusammenspiel zwischen der Transportgeschwindigkeit der Transportketten, der Bewegungsgeschwindigkeit des Zufuhrportals und der Bewegungsgeschwindigkeit des Fadenlegers kann die Ausrichtung der Fäden der abgelegten Fadenschar gegenüber der Transportrichtung der Transportketten festgelegt werden. Die Ausrichtung der Fäden kann dabei so ausgeführt werden, dass zwischen den Fäden und der Transportrichtung des entstehenden multiaxialen Fadengeleges ein Winkel von 0 Grad (Fäden liegen parallel zur Transportrichtung), ein Winkel von 90 Grad (Fäden liegen im rechten Winkel zur Transportrichtung) oder ein Winkel zwischen 0 Grad und 90 Grad gebildet wird. Auf die untere Fadenlage wird dann in analoger Weise eine obere Fadenlage abgelegt, wobei sich die Ausrichtung der Fäden der oberen Fadenlage gegenüber der Ausrichtung der Fäden der unteren Fadenlage unterscheidet. Je nach Anwendungsfall können auf die obere Fadenlage weitere Fadenlagen abgelegt werden. Weiterhin können zwischen aufeinander liegenden Fadenlagen auch Inlays, wie beispielsweise Folien, Schäume oder Textilien eingelegt werden. Nachdem die gewünschte Anzahl an Fadenlagen abgelegt worden ist, werden die Fäden der Fadenlagen mit einer Fixiereinheit zumindest lokal miteinander verbunden und anschließend als Rollenware aufgewickelt.

Eine ähnliche Multiaxialmaschine ist aus DE 10 2007 024 124 B3 bekannt, wobei die Fixiereinheit hier eine Wirkmaschine ist, die die Fäden der Fadenlagen mit einem Wirkfaden verwirkt.

Mit den aus dem Stand der Technik bekannten Multiaxialmaschinen werden multiaxiale Fadengelege bisher als Rollenware kontinuierlich hergestellt. Sollen die multiaxialen Fadengelege als Faserverstärkung in gekrümmten oder ringförmigen Strukturen Anwendung finden, müssen sie entsprechend gekrümmt werden. Insbesondere für vollständig geschlossene ringförmige Strukturen erfordert dies eine starke Krümmung. Dies führt allerdings zu einem Verwinden und Verschieben der Fadenlagen untereinander. Weiterhin wird eine Stoß- oder Überlappstelle gebildet, die separat geschlossen werden muss. Nachteilig ist, dass durch das Verwinden und Verschieben der Fadenlagen sowie der nachträglich geschlossenen Stoß- oder Überlappstelle Inhomogenitäten in dem multiaxialen Fadengelege entstehen, was letztlich die Belastbarkeit der ringförmigen Strukturen negativ beeinflussen kann.

Aufgabe der Erfindung ist es daher, ein Verfahren und eine Vorrichtung zur Bildung eines multiaxialen Fadengeleges für ringförmige Strukturen zu schaffen, welches keine Verwindung oder Verschiebung der Fadenlagen aufweist. Weiterhin soll zur Bildung eines geschlossenen Rings des multiaxialen Fadengeleges das separate Schließen einer Stoß-oder Überlappstelle entfallen.

Diese Aufgabe wird erfindungsgemäß mit einem Verfahren mit den Merkmalen des Anspruchs 1 gelöst. Vorteilhafte Ausgestaltungen des Verfahrens finden sich in den Ansprüchen 2 bis 5. Das Verfahren umfasst die folgenden Schritte:
a. Vollumfängliches Ablegen einer unteren Fadenlage in Form einer endlosen Fadenschar oder eines endlosen Einzelfadens oder in Form von Fadenscharabschnitten oder Einzelfadenabschnitten auf zwei beabstandet angeordnete Ringelemente, wobei die Fadenschar oder der Einzelfaden oder die Fadenscharabschnitte oder die Einzelfadenabschnitte der unteren Fadenlage nach dem Ablegen von entlang des Ringumfangs der Ringelemente angeordneten Fadenhalteelementen vorübergehend gehalten wird und wobei die Fäden der Fadenschar oder der Fadenscharabschnitte oder der Einzelfaden oder die Einzelfadenabschnitte der unteren Fadenlage gegenüber der Umfangsrichtung der Ringelemente einen Winkel im Bereich von größer 0 Grad bis 90 Grad einschließen,
b. Vollumfängliches Ablegen einer oberen Fadenlage in Form einer endlosen Fadenschar oder eines endlosen Einzelfadens oder in Form von Fadenscharabschnitten oder Einzelfadenabschnitten auf die zwei beabstandet angeordneten Ringelemente, wobei die Fadenschar oder der Einzelfaden oder die Fadenscharabschnitte oder die Einzelfadenabschnitte der oberen Fadenlage nach dem Ablegen von den entlang des Ringumfangs angeordneten Fadenhalteelementen vorübergehend gehalten wird und wobei die Fäden der Fadenschar oder der Einzelfaden oder die Fadenscharabschnitte oder die Einzelfadenabschnitte der oberen Fadenlage gegenüber den Fäden der Fadenschar oder dem Einzelfaden oder den Fadenscharabschnitten oder den Einzelfadenabschnitten der unteren Fadenlage einen Winkel von größer 0 Grad einschließen,
c. Punktuelles Fixieren der Fäden der Fadenschar oder des Einzelfadens oder der Fadenscharabschnitte oder der Einzelfadenabschnitte der unteren Fadenlage mit den Fäden der Fadenschar oder dem Einzelfaden oder der Fadenscharabschnitte oder der Einzelfadenabschnitte der oberen Fadenlage mittels Fixiereinheit entlang des Umfangs der ringförmig gelegten unteren und oberen Fadenlage,
d. Lösen der unteren und der oberen Fadenlage von den Fadenhalteelementen,
e. Abnehmen des ringförmigen multiaxialen Fadengeleges von den beabstandeten Ringelementen.

Mit dem Verfahren werden die Fadenlagen durch das vollumfängliche Ablegen auf den Ringelementen vor dem Fixieren der Fäden bereits in ihre für das spätere Produkt vorgesehene Form gebracht. Ein Krümmen bereits miteinander fixierter Fadenlagen ist nicht mehr nötig, sodass Verwindungen und Verschiebungen der Fadenlagen durch ein Krümmen vermieden werden. Da die Fadenlagen in Form einer endlosen Fadenschar oder eines endlosen Einzelfadens oder in Form von Fadenscharabschnitten oder Einzelfadenabschnitten auf die Ringelemente aufgelegt werden, entsteht gegenüber einer nachträglichen Krümmung der Fadenlagen auch keine Stoß- oder Überlappstelle, die nachträglich geschlossen werden muss. Mit der Ablage der Fadenlagen mit sich unterscheidenden Ausrichtungen der Fäden wird ein multiaxiales Fadengelege in Ringform gebildet.

Zwischen der unteren Fadenlage und der oberen Fadenlage können eine weitere Fadenlage oder weitere Fadenlagen in Form einer endlosen Fadenschar oder eines endlosen Einzelfadens oder in Form von Fadenscharabschnitten oder Einzelfadenabschnitten auf die zwei beabstandet angeordneten Ringelemente vollumfänglich abgelegt und mit den Fadenhalteelementen gehalten werden, wobei die Fäden der Fadenschar oder der Einzelfaden oder der Fadenscharabschnitte oder der Einzelfadenabschnitte der weiteren Fadenlage gegenüber den Fäden der Fadenschar oder dem Einzelfaden oder der Fadenscharabschnitte oder der Einzelfadenabschnitte der jeweils benachbarten Fadenlagen einen Winkel von größer 0 Grad einschließen. Über die Anzahl der weiteren Fadenlagen und die Ausrichtung der Fäden der weiteren Fadenlagen kann das multiaxiale Fadengelege auf die jeweiligen Anforderungen hinsichtlich Stabilität, Zugfestigkeit, Flexibilität etc. entsprechend aufgebaut werden.

Die Fäden der Fadenschar oder der Einzelfaden oder der Fadenscharabschnitte oder der Einzelfadenabschnitte der unteren Fadenlage und/oder der oberen Fadenlage und/oder der weiteren Fadenlagen können aus identischen oder sich unterscheidenden Materialien gebildet sein. Auch die Fäden jeweils innerhalb einer der Fadenscharen können aus identischen oder sich unterscheidenden Materialien (Hybridfaserbündel) gebildet sein. Durch geeignete Materialwahl bzw. Materialkombination kann das multiaxiale Fadengelege weiter auf die jeweiligen Anforderungen hinsichtlich Stabilität, Zugfestigkeit, Flexibilität etc. angepasst werden.

Zum punktuellen Fixieren der Fadenlagen werden die Fäden beispielsweise mit einem Wirkfaden verwirkt oder mit Klammerelementen verklammert oder thermisch fixiert.

Beim Ablegen der Fadenlagen, kann zwischen einem Teil der Fadenlagen vollumfänglich ein flächiges Lagenmaterial oder eine Stehfadenschicht aufgelegt werden. In dem multiaxialen Fadengelege kann dieses Lagenmaterial weitere Funktionseigenschaften bereitstellen. Das flächige Lagenmaterial kann beispielsweise eine Trennfolie und/oder ein Vlies und/oder ein Abstandsgewirke sein. Die Stehfäden werden so aufgelegt, dass diese parallel zur Ringumlaufrichtung ausgerichtet sind.

In einer vorteilhaften Ausführung wird vor dem Lösen der fixierten Fadenlagen von den Fadenhalteelementen der Ringelemente auf einer Innenseite des ringförmigen multiaxialen Fadengeleges und/oder einer Außenseite des ringförmigen multiaxialen Fadengeleges ein polymeres Matrixmaterial aufgetragen. Damit können die mechanischen Eigenschaften weiter auf den jeweiligen Anwendungsfall des ringförmigen multiaxialen Fadengeleges angepasst werden.

Weiterhin wird eine Multiaxialmaschine mit den Merkmalen des Anspruchs 6 zur Herstellung eines ringförmigen multiaxialen Fadengeleges mit dem erfindungsgemäßen Verfahren vorgeschlagen. Vorteilhafte Ausgestaltungen sind in den Ansprüchen 7 bis 12 hinterlegt. Die Multiaxialmaschine weist zwei beabstandete und zueinander lagefixierte Ringelemente mit entlang des Ringumfangs angeordneten Fadenhalteelementen, zumindest einen an einem ersten Zufuhrportal geführten und von einer ersten Fadenzufuhr versorgten ersten Fadenleger zur Ablage einer Fadenlage in Form einer endlosen Fadenschar oder eines endlosen Einzelfadens oder in Form von Fadenscharabschnitten oder Einzelfadenabschnitten auf die zwei beabstandet angeordneten Ringelementen und eine Fixiereinheit zur lokalen Fixierung der Fäden der auf den Ringelementen abgelegten Fadenlagen auf. Der erste Fadenleger ist an dem ersten Zufuhrportal quer zur Umfangsrichtung der Ringelemente zwischen den Ringelementen hin- und herbewegbar. Das erste Zufuhrportal und die zueinander lagefixierten Ringelemente sind entlang der Umfangsrichtung gegeneinander verdrehbar.

In einer weiteren Ausführung weist die Multiaxialmaschine zumindest einen an einem zweiten Zufuhrportal geführten und von einer zweiten Fadenzufuhr versorgten zweiten Fadenleger zur Ablage einer weiteren Fadenlage in Form einer endlosen Fadenschar oder eines endlosen Einzelfadens oder in Form von Fadenscharabschnitten oder Einzelfadenabschnitten auf die zwei beabstandet angeordnete Ringelemente auf. Der zweite Fadenleger ist an dem zweiten Zufuhrportal quer zur Umfangsrichtung der Ringelemente zwischen den Ringelementen hin- und herbewegbar. Das zweite Zufuhrportal und die zueinander lagefixierten Ringelemente sind entlang der Umfangsrichtung gegeneinander verdrehbar.

Es wird vorgeschlagen, dass eine Außenkontur der beiden Ringelemente deckungsgleich oder dass eine Außenkontur des einen Ringelementes größer ist als eine Außenkontur des anderen Ringelementes ist.

Weiterhin weist die Multiaxialmaschine eine Zuführeinrichtung zur Zuführung und Ablage eines flächigen Lagenmaterials auf der Fadenlage oder der weiteren Fadenlage auf.

Es wird vorgeschlagen, dass die Fixiereinheit eine Klammereinheit oder eine Wirkeinheit oder eine Heizeinheit ist.

Eine Ausführung sieht vor, dass die Ringelemente eine kreisförmige oder ovale oder elliptische Außenkontur aufweisen. Es ist dabei auch nicht grundsätzlich ausgeschlossen, dass eines der Ringelemente beispielsweise eine kreisförmige Außenkontur und das andere Ringelement beispielsweise eine elliptische Außenkontur aufweist.

In einer weiteren Ausführungsform weisen die Ringelemente eine Außenkontur in Form eines regelmäßigen Polygons auf.

Bei kreisrunden Ringelementen ist die Ablage der unteren Fadenlage mit einem Winkel von 90 Grad zwischen den Fäden der Fadenschar oder der Fadenscharabschnitte oder dem Einzelfaden oder der Einzelfadenabschnitte der unteren Fadenlage und der Umfangsrichtung der Ringelemente bevorzugt. Mit einer derartigen Ablage wird die runde Außenkontur der Ringelemente am besten auf die Innenkontur der unteren Fadenlage übertragen. Mit dem Ablegen der Fadenlagen auf Ringelementen mit identischer Außenkontur entsteht dabei ein multiaxiales ringförmiges Gelege in Form eines Zylinders. Unterscheiden sich die Außenkonturen der Ringelemente in ihrer Ausdehnung, entsteht ein multiaxiales ringförmiges Gelege in Form eines Kegelstumpfes. Je kleiner der Winkel zwischen den Fäden der Fadenschar oder der Fadenscharabschnitte oder dem Einzelfaden oder der Einzelfadenabschnitte der unteren Fadenlage und der Umfangsrichtung der Ringelemente, umso mehr weicht die Innenkontur der auf den Ringelementen abgelegten unteren Fadenlage im Bereich zwischen den Ringen von der Außenkontur der Ringelemente ab, was aber je nach Anwendungsfall nicht nachteilig sein muss.

In einer vorteilhaften Ausführung ist zwischen den beiden beabstandeten Ringelementen entlang des Ringumfangs zumindest abschnittsweise ein Unterstützungselement zur Stützung der auf den Ringelementen abgelegten unteren Fadenlage vorgesehen. Insbesondere bei der Ablage der unteren Fadenlage auf kreisförmigen Ringelementen mit einem Winkel von kleiner 90 Grad gegenüber der Ringumlaufrichtung wird damit die gewünschte Innenkontor des ringförmigen multiaxialen Fadengeleges beim Ablegen der Fadenlagen aufrechterhalten.

Es wird vorgeschlagen, dass das Unterstützungselement ein zumindest abschnittsweise entlang des Ringumfangs umlaufendes Bandelement ist. Dieses Bandelement ist auf einer Innenseite des sich aufbauenden ringförmigen multiaxialen Fadengeleges angeordnet.

In einer vorteilhaften Ausgestaltung sind die Fadenhalteelemente Nadeln, die gemeinsam einen Nadelkranz entlang der Ringelemente bilden. Um diese Nadeln wird die Fadenschar oder der Einzelfaden beim Ablegen herumgelegt, sodass damit eine Fixierung des Fadens an den Ringelementen erreicht wird. In einer alternativen Ausgestaltung sind die Fadenhalteelemente entlang der Ringelemente angeordnete Klemmelemente, die den Faden oder die Fadenabschnitte fixieren.

Weiterhin wird ein ringförmiger Gegenstand mit einem mit dem erfindungsgemäßen Verfahren hergestellten ringförmigen multiaxialen Fadengelege beansprucht (Ansprüche 13 bis 15).

Es wird vorgeschlagen, dass die Fäden der untere Fadenlage und/oder der oberen Fadenlage und/oder der weiteren Fadenlage und/oder der weiteren Fadenlagen und/oder das flächige Lagenmaterial aus Polyamid oder aromatischem Polyamid oder Polyethylenterephthalat oder regenerierter Cellulose oder Metall oder Kohlenstoff oder Glas oder ultrahochmolekularem Polyethylen oder Polypropylen oder Polyacrylnitril oder PBO (poly(p-phenylene-2,6-benzobisoxazole)) oder PBI (Polybenzimidazole) oder PPS (Polyphenylene sulfide) oder organischen Fasern oder Kombinationen hieraus gebildet sind.

Eine Ausführung sieht vor, dass der ringförmige Gegenstand ein Fahrzeugreifen ist und das ringförmige multiaxiale Fadengelege in dem Reifenmantel integriert ist.

Nachfolgend wird ein Ausführungsbeispiel der Erfindung anhand der Zeichnungen erläutert. Es zeigen:
- Fig. 1: eine Seitenansicht einer erfindungsgemäßen Multiaxialmaschin
- Fig. 2: eine um 90 Grad gedrehte Seitenansicht der in Fig. 1 gezeigten Multiaxialmaschine
- Fig. 3a bis: einen Verfahrensablauf zur Bildung eines ringförmigen multiaxialen
- Fig. 3d: Fadengeleges
- Fig. 4: eine Seitenansicht des ringförmigen multiaxialen Fadengeleges mit Abstandsgewirke aus Fig. 3d
- Fig. 5: räumliche schematische Darstellung eines ringförmigen multiaxialen Fadengeleges und eine diesbezügliche Detaildarstellung im Schnitt
- Fig. 6: räumliche schematische Darstellung eines weiteren ringförmigen multiaxialen Fadengeleges und eine diesbezügliche Detaildarstellung im Schnitt

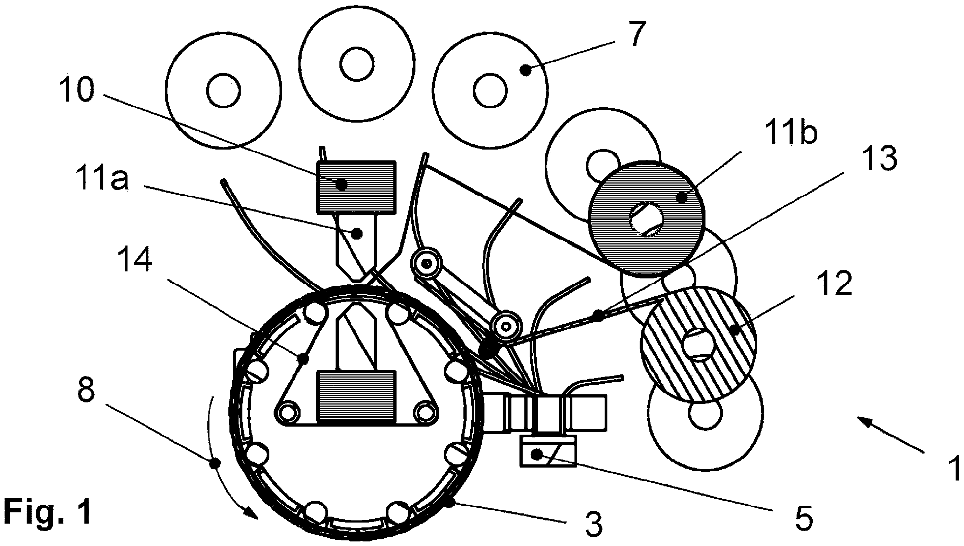

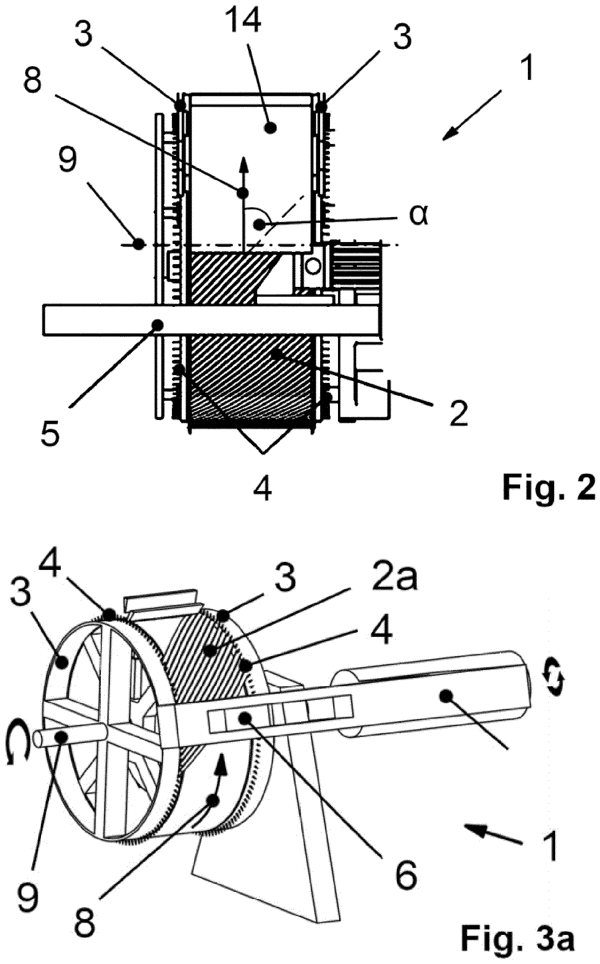

**Fig. 1** zeigt eine Seitenansicht einer erfindungsgemäßen Multiaxialmaschine 1 zur Herstellung eines ringförmigen multiaxialen Fadengeleges 2. **Fig. 2** zeigt eine um 90 Grad gedrehte Seitenansicht der in **Fig. 1** gezeigten Multiaxialmaschine 1. Die Multiaxialmaschine 1 weist zwei beabstandete und zueinander lagefixierte Ringelemente 3 mit entlang des Ringumfangs angeordneten Fadenhalteelementen 4 auf. In der dargestellten Ausführung sind die Fadenhalteelemente 4 Nadeln, die jeweils einen Nadelkranz entlang der Ringelemente 3 bilden. Die Dimension der Ringelemente 3 ist auf die Dimension des ringförmigen multiaxialen Fadengeleges 2 abgestimmt. Weiterhin weist die Multiaxialmaschine 1 einen an einem Zufuhrportal 5 geführten Fadenleger 6 auf. In der dargestellten Ausführung wird der Fadenleger 6 von einer aus sechs Fadenspulen 7 gebildeten Fadenzufuhr versorgt (in **Fig. 2** ist die Fadenzufuhr nicht gezeigt). Der Fadenleger 6 ist an dem Zufuhrportal 5 quer zur Umfangsrichtung 8 der Ringelemente 3 zwischen den Ringelementen 3 hin- und herbewegbar. Das Zufuhrportal 5 und die zueinander lagefixierten Ringelemente 3 sind entlang der Umfangsrichtung 8 gegeneinander verdrehbar. Hierzu sind die beiden Ringelemente 3 gemeinsam mit einer (nicht dargestellten) Antriebsvorrichtung in oder gegen Uhrzeigersinn (USZ) um ihre Drehachsen 9 drehbar oder das Zufuhrportal 5 ist mit einer (nicht dargestellten) Antriebsvorrichtung entlang der Umfangsrichtung 8 in oder gegen USZ an der Außenkontur der Ringelemente 3 führbar. Ebenso ist auch eine Kombination aus beiden Bewegungen möglich.

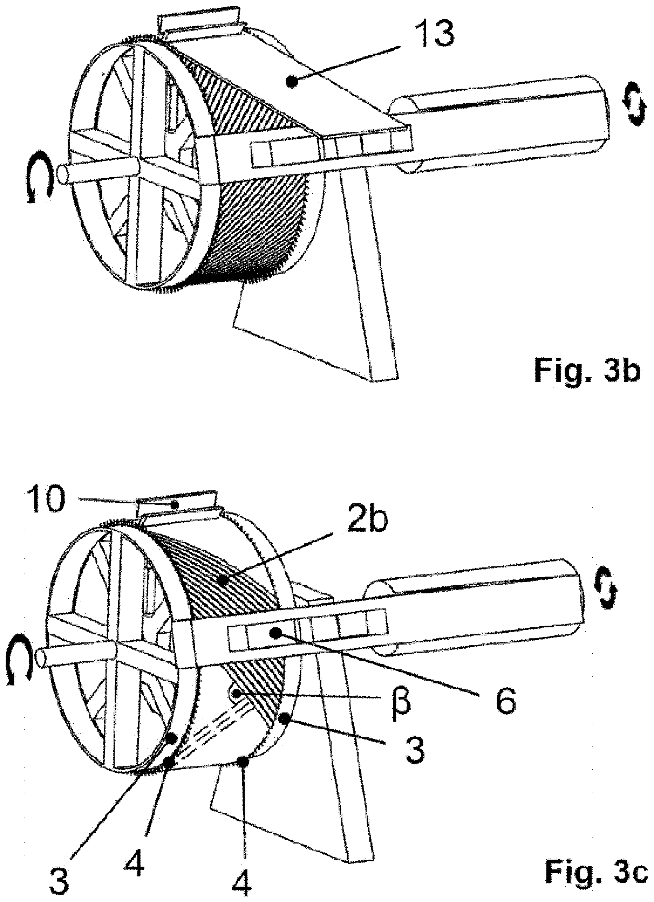

Erfindungsgemäß werden zur Bildung eines ringförmigen multiaxialen Fadengeleges 2 zumindest eine untere Fadenlage 2a (Fig. 3a) und ein obere Fadenlage 2b (Fig. 3c) auf den Ringelementen 3 abgelegt. Zur Ablage der untere Fadenlage 2a wird mit dem Fadenleger 6 eine von der Fadenzufuhr bereitgestellte endlose Fadenschar auf die zwei beabstandet angeordnete Ringelemente 3 aufgelegt, wobei die Fadenschar von den entlang des Ringumfangs angeordneten Fadenhalteelementen 4 vorübergehend gehalten wird. In der dargestellten Ausführung wird die Fadenschar beim Ablegen um die Nadeln der Nadelkränze herumgelegt und damit am jeweiligen Ringelement 3 gehalten. Das Ablegen der Fadenschar und das Herumlegen um die Nadeln eines Ringelementes 3 bilden einen Ablageteilschritt. Für eine vollumfängliche Ablage der Fadenschar ist ein Nacheinanderausführen mehrerer Ablageteilschritte notwendig, wobei die Fadenschar beim Ablegen dabei alternierend jeweils um einen Teil der Nadeln des einen Ringelements 3 und um einen Teil der Nadeln des anderen Ringelementes 3 geführt werden. Über ein Zusammenspiel zwischen Bewegungsgeschwindigkeit des Fadenlegers 6 entlang des Zufuhrportals 5 und der gegenseitigen Verdrehung von Zufuhrportal 5 und Ringelementen 3 entlang der Umfangsrichtung 8 ist die Ausrichtung der Fäden der unteren Fadenlage 2a gegenüber der Umfangsrichtung 8 einstellbar. Die Fäden der Fadenschar der unteren Fadenlage 2a schließen mit der Umfangsrichtung 8 einen Winkel α im Bereich von größer 0 Grad bis 90 Grad ein. Je schneller die gegenseitige Verdrehung von Zufuhrportal 5 und Ringelemente 3 oder je langsamer die Bewegungsgeschwindigkeit des Fadenlegers 6 entlang des Zufuhrportals 5 ausgeführt wird, umso kleiner wird der Winkel α zwischen den Fäden und der Umfangsrichtung 8. Erfolgt beim Ablegen der Fäden der Fadenschar bei der Bewegung des Fadenlegers 6 entlang des Zufuhrportals 5 innerhalb eines Ablageteilschritts keine gegenseitige Verdrehung von Zufuhrportal 6 und Ringelemente 3, wird zwischen den Fäden und der Umfangsrichtung ein Winkel α von 90 Grad erzeugt. Je nach Breite der Fadenschar sind mehrere Ablageteilschritte notwendig, um eine entlang der Ringelemente 3 vollumfängliche Abdeckung zu erreichen. Die Breite der Fadenschar wird durch die Anzahl der nebeneinander liegenden Fäden eines Fadenbündels bestimmt. Die Dimensionierung der Fadenschar kann so abgestimmt sein, dass die Umfangslänge der Ringelemente 3 ein ganzzahliges Vielfaches der Breite der Fadenschar ist. Dies ist allerdings nicht zwingend, sodass bei einer vollumfänglichen Ablage der Fadenschar ein Teil der Fäden des letzten Ablageteilschritts der Fadenschar mit einem Teil der ersten Ablage der Fadenschar überlappen kann.

Durch einen weiteren Umlauf wird in analoger Weise eine obere Fadenlage 2b vollumfänglich auf den beiden beabstandet angeordneten Ringelementen 3 abgelegt. Durch Änderung der Bewegungsgeschwindigkeit des Fadenlegers 6 entlang des Zufuhrportals 5 und/oder der gegenseitigen Verdrehung von Zufuhrportal 5 und Ringelemente 3 wird die Ausrichtung der Fäden der oberen Fadenlage 2b gegenüber den Fäden der unteren Fadenlage 2a verändert, sodass die Ablage der unteren Fadenlage 2a und der oberen Fadenlage 2b multiaxial ist. Die Fäden der Fadenschar der oberen Fadenlage 2b schließen mit den Fäden der Fadenschar der unteren Fadenlage 2a einen Winkel β (Fig. 3c) von größer 0 Grad ein. Wie auch bei der unteren Fadenlage 2a ist ebenso bei der oberen Fadenlage 2b anstelle der vollumfänglichen Ablage einer Fadenschar auch die Ablage eines Einzelfadens möglich.

Nach der Ablage der unteren Fadenlage 2a und der oberen Fadenlage 2b erfolgt vollumfänglich ein punktuelles Fixieren der Fäden der unteren Fadenlage 2a mit den Fäden der oberen Fadenlage 2b. Hierzu weist die Multiaxialmaschine 1 eine Fixiereinheit 10 auf. Die Fixiereinheit 10 kann beispielsweise eine Klammereinheit oder eine Wirkeinheit oder eine Heizeinheit sein, ohne dass die Erfindung hierauf beschränkt ist. Mit einer Klammereinheit werden die Fäden der Fadenlagen punktuell mit Klammerelementen aneinandergeheftet. Bei einer als Heizeinheit ausgeführten Fixiereinheit erfolgt ein punktueller Wärmeeintrag in die Fadenlagen 2a, 2b, die (bei geeigneter Wahl der Fadenmaterialien) ein punktuelles Aufschmelzen der Fäden verursacht. Beim Abkühlen entstehen dann punktuelle stoffschlüssige Verbindungen zwischen den Fäden der Fadenlagen 2a, 2b. Mit einer als Wirkeinheit ausgeführten Fixiereinheit 10 werden die Fäden der Fadenlagen 2a, 2b punktuell mit einem Wirkfaden miteinander verbunden. **Fig. 1** zeigt die Multiaxialmaschine mit einer als Wirkeinheit ausgestalteten Fixiereinheit. Die Wirkeinheit weist eine Wirknadeleinheit 11a und eine Wirkfadenzufuhreinheit 11b auf.

In einer nicht dargestellten Ausführung weist die Multiaxialmaschine 1 zumindest einen (zum ersten Fadenleger 6 analogen) weiteren Fadenleger auf, der an einem weiteren Zufuhrportal geführt ist und von einer weiteren Fadenzufuhr versorgt wird. Auch hier sind der weitere Fadenleger an dem weiteren Zufuhrportal quer zur Umfangsrichtung 8 der Ringelemente 3 zwischen den Ringelementen 3 hin- und herbewegbar und das weitere Zufuhrportal und die Ringelemente 3 sind entlang der Umfangsrichtung gegeneinander verdrehbar. Beispielsweise wird mit dem ersten Fadenleger 6 die untere Fadenlage 2a und mit dem weiteren Fadenleger die obere Fadenlage 2b oder eine weitere Fadenlage gelegt. Vorteil ist hier, dass beide Fadenleger mit einem Versatz entlang des Umfangs der Ringelemente 3 angeordnet werden können und beide Fadenlagen nahezu gleichzeitig abgelegt werden können, wobei zur Ablage beider Fadenlagen 2a, 2b weniger als zwei vollständige gegenseitige Verdrehungen von Zufuhrportal 5 und Ringelementen 3 ausreichend sind, was letztlich die Geschwindigkeit zum Ablegen der Fadenlagen 2a, 2b erhöht.

Zur Bildung des multiaxialen Fadengeleges 2 werden die untere Fadenlage 2a und die obere Fadenlage 2b abgelegt und miteinander fixiert. Darüber hinaus können zwischen der unteren Fadenlage 2a und der oberen Fadenlage 2b auch eine oder mehrere weitere Fadenlagen abgelegt werden.

Nach dem punktuellen Verbinden der Fäden werden die Fadenlagen 2a, 2b (und ggf. die weiteren Fadenlagen) von den Fadenhalteelementen 4 gelöst (beispielsweise werden die als Nadeln ausgeführten Fadenhalteelemente eingefahren oder die Fäden werden von den Nadeln abgeschnitten). Anschließend wird das gebildete ringförmige multiaxiale Fadengelege 2 von den beabstandeten Ringelementen 3 abgenommen (z.B. in axialer Richtung von den Ringelementen 3 heruntergeschoben).

Die Multiaxialmaschine 1 in **Fig. 1** weist eine optionale Zuführeinrichtung 12 zur Zuführung und vollumfänglichen Ablage eines flächigen Lagenmaterials 13 auf einer gelegten Fadenlage auf. Das flächige Lagenmaterial 13 kann dabei auf die untere Fadenlage 2a oder auf eine zwischen erster und zweiter Fadenlage 2a, 2b angeordneten weiteren Fadenlage oder auch auf der oberen Fadenlage 2a abgelegt werden. Ebenso können bei der Bildung des ringförmigen multiaxialen Fadengeleges 2 auch mehrere flächige Lagenmaterialen 13 eingelegt werden, wobei beispielsweise zwischen der unteren Fadenlage 2a und einer weiteren Fadenlage und zwischen der weiteren Fadenlage und der oberen Fadenlage 2b jeweils ein flächiges Lagenmaterial 13 vollumfänglich auf der jeweiligen Fadenlage abgelegt wird. Beim punktuellen Fixieren der Fadenlagen 2a, 2b werden die flächigen Lagenmaterialen 13 ebenfalls zwischen den Fadenlagen 2a, 2b fixiert. Wird beispielsweise mit einem Verklammern oder einem Verwirken zum Fixieren gearbeitet, werden die flächigen Lagenmaterialen 13 von den Klammerelementen oder den Wirknadeln durchstochen und die Klammern bzw. der Wirkfaden durch die flächigen Lagenmaterialen 13 geführt, wodurch diese an den Fadenlagen 2a, 2b fixiert werden. Die flächigen Lagenmaterialen 13 können beispielsweise eine Trennfolie und/oder ein Vlies und/oder ein Abstandsgewirke, ohne dass die Erfindung hierauf beschränkt ist.

Weiterhin weist die in **Fig. 1** und **Fig. 2** gezeigte Multiaxialmaschine 1 ein optionales Unterstützungselement 14 auf. In der dargestellten Ausführung ist dieses Unterstützungselement 14 ein zumindest abschnittsweise entlang des Ringumfangs umlaufendes Bandelement, welches zwischen den beiden beabstandeten Ringelementen 3 angeordnet ist. Dieses Bandelement bildet die für das ringförmige multiaxiale Fadengelege 2 vorgesehene Innenkontur zumindest abschnittsweise nach. Das Unterstützungselement 14 ist zur Stützung der auf den Ringelementen 3 abgelegten unteren Fadenlage 2a vorgesehen. Dies ist insbesondere dann vorteilhaft, wenn die Fäden der untere Fadenlage 2a und die Ringumfangsrichtung 8 einen Winkel α von kleiner 90 Grad einschließen. Je kleiner der Winkel α zwischen den Fäden der untere Fadenlage 2a und der Ringumfangsrichtung 8, umso stärker kann die Innenkontur der unteren Fadenlage 2a von der Außenkontur der Ringelemente 3 abweichen, da die Fadenabschnitte zwischen den Fadenhalteelementen 4 der beabstandeten Ringelemente 2 stets die kürzeste Strecke einnehmen. Das Unterstützungselement 14 ist dabei so angeordnet, dass die Fäden der unteren Fadenlage 2a bei der Ablage auf den Ringelementen 3 ebenfalls auf dem Unterstützungselement 14 aufliegen und damit die untere Fadenlage 2a mit der für das ringförmige multiaxiale Fadengelege 2 vorgesehenen Innenkontur gehalten wird. Das Bandelement wird entweder synchron mit einer Drehung der Ringelemente 3 mitgeführt, oder das Bandelement verbleibt gegenüber der Ringelemente 3 ortsfest, wobei die auf dem Bandelement aufliegenden Fäden der unteren Fadenlage 2a bei einer Drehung der Ringelemente 3 auf dem Bandelement entlanggleiten. Werden die Fäden der unteren Fadenlage 2a rechtwinklig zur Ringumlaufrichtung 8 der Ringelemente 3 gelegt, kann das Unterstützungselement 14 auch entfallen.

In der dargestellten Ausführung sind die Außenkonturen der Ringelemente 3 kreisförmig ausgebildet. Die erfindungsgemäße Multiaxialmaschine 1 ist allerdings nicht auf diese Ausführung beschränkt. Beispielsweise können die Ringelemente 3 auch eine ovale oder elliptische Außenkontur aufweisen. Ebenso können die Ringelemente 3 auch eine Außenkontur in Form eines regelmäßigen Polygons aufweisen. Weiterhin sind die Drehachsen 9 der beiden Ringelemente 3 in der in **Fig. 1** dargestellten Ausführung axial zueinander ausgerichtet. Auch dies ist nicht zwingend. Die Drehachsen 9 der beiden Ringelemente 3 können auch parallel gegeneinander verschoben sein.

Die Erfindung ist nicht auf als Nadeln ausgeführte Fadenhalteelemente 4 beschränkt. Beispielsweise können die Fadenhalteelemente 4 auch als Klemmelemente ausgeführt sein.

Die Fäden der Fadenschar oder der Einzelfaden der unteren Fadenlage 2a und/oder der oberen Fadenlage 2b und/oder der weiteren Fadenlage und/oder der weiteren Fadenlagen aus identischen oder sich unterscheidenden Materialien gebildet sind. Weiterhin können auch die Fäden innerhalb der Fadenscharen aus identischen oder sich unterscheidenden Materialien gebildet sein (Hybridfaserbündel).

Alternativ zur Ablage einer Fadenschar ist auch die vollumfängliche Ablage eines endlosen Einzelfadens möglich, wobei hier dann aber gegenüber der Ablage einer Fadenschar mehr Ablageteilschritte für eine vollumfängliche Ablage notwendig sind. Ebenso können anstelle der Ablage einer endlosen Fadenschar oder eines endlosen Fadens auch Einzelfadenabschnitte oder Fadenscharabschnitte auf den beiden Ringelementen 3 abgelegt werden. Die Einzelfadenabschnitte oder die Fadenscharabschnitte können entweder beim Ablegen aus einem endlosen Faden oder einer endlosen Fadenschar herausgetrennt werden. Ebenso können die Einzelfadenabschnitte oder die Fadenscharabschnitte auch mit der zum Ringabstand passenden Länge vorkonfektioniert zugeführt und auf den Ringelementen 3 abgelegt werden.

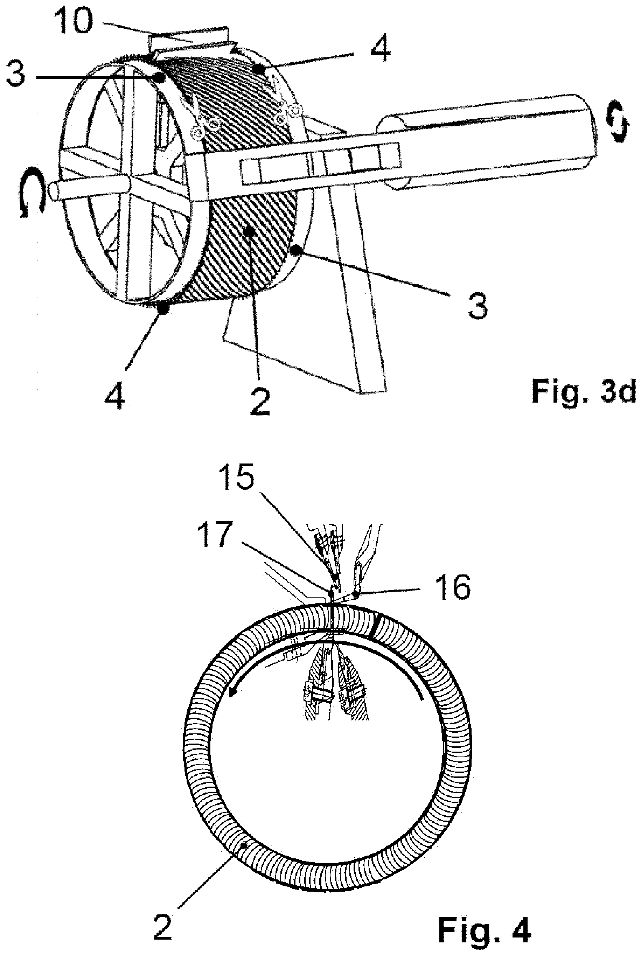

**Fig. 3a** bis **Fig. 3d** zeigt einen Verfahrensablauf zur Bildung eines ringförmigen multiaxialen Fadengeleges 2 mit der unteren Fadenlage 2a, der oberen Fadenlage 2b und einem zwischen der unteren und der oberen Fadenlage 2a, 2b eingelegten flächigen Lagenmaterial 13. In einem ersten Schritt wird die untere Fadenlage 2a mit dem Fadenleger 6 aufgelegt und mit den Fadenhaltelementen 4 (hier ebenfalls als Nadelkränze ausgeführt) gehalten. Die Fäden der unteren Fadenlage 2a sind so ausgerichtet, dass zwischen diesen Fäden und der Ringumlaufrichtung 8 ein Winkel α von 45 Grad eingeschlossen wird. In der Darstellung gemäß **Fig. 3a** ist die untere Fadenlage 2a noch nicht vollumfänglich auf den Ringelementen 3 abgelegt. Im zweiten Schritt **(****Fig. 3b****)** wird auf die nun vollumfänglich gelegte untere Fadenlage 2a das flächige Lagenmaterial 13 zugeführt und vollumfänglich aufgelegt. Die Zufuhr des flächigen Lagenmaterials 13 kann dabei in bereits auf die entsprechende Länge konfektionierter Bogenform erfolgen. Ebenso kann das flächige Lagenmaterial 13 auch als Rollenware zugeführt und nach dem vollumfänglichen Ablegen nach entsprechender Länge abgeschnitten werden. In der Darstellung gemäß **Fig. 3b** ist das flächige Lagenmaterial 13 noch nicht vollumfänglich auf der unteren Fadenlage 2a abgelegt. Im dritten Schritt **(****Fig. 3c****)** wird die obere Fadenlage 2b mit dem Fadenleger 6 aufgelegt und mit den Fadenhaltelementen 4 (Nadelkränze) gehalten. Die Fäden der oberen Fadenlage 2b sind so ausgerichtet, dass zwischen diesen Fäden und den Fäden der unteren Fadenlage 2a ein Winkel β von 90 Grad eingeschlossen wird. In der Darstellung gemäß **Fig. 3c** ist die obere Fadenlage 2b noch nicht vollumfänglich auf den Ringelementen 3 abgelegt. Die gestrichelten Linien in Fig. 3c symbolisieren drei Fäden der unteren Fadenlage, die von dem flächigen Lagenmaterial 13 verdeckt ist. Nach dem vollumfänglichen Ablegen der oberen Fadenlage 2b werden die Fäden der Fadenlagen 2a, 2b mit dem dazwischen liegendem flächigen Lagenmaterial 13 mittels der als Wirkeinheit ausgeführten Fixiereinheit 10 verwirkt. Im vierten Schritt **(****Fig. 3d****)** werden die Fäden der ersten und oberen Fadenlage 2a, 2b durch Abschneiden von den als Nadelkränzen gebildeten Fadenhaltelementen 4 gelöst, sodass im Anschluss das erzeugte ringförmige multiaxiale Fadengelege 2 von den Ringelementen 3 abgenommen werden kann.

**Fig. 4** zeigt eine Seitenansicht des ringförmigen multiaxialen Fadengeleges 2 mit Abstandsgewirke aus **Fig. 3d****.** Weiterhin dargestellt sind die Lochnadeln 15 der Legebarren, die Abschlagplatte 16 und die Wirknadel 17 mit Schieber der Wirkeinheit. In der Darstellung sind die Lochnadeln 15 der Legbarren und die Abschlagplatte 16 auf der Außenseite des ringförmigen multiaxialen Fadengeleges 2 und die Wirknadel 17 und Schieber mit der Wirknadelführung auf der Innenseite des ringförmigen multiaxialen Fadengeleges 2 angeordnet. Grundsätzlich ist aber auch eine umgekehrte Anordnung der Wirkeinheit möglich. Um die Entnahme des fertigen ringförmigen multiaxialen Fadengeleges 2 zu ermöglichen, sollte eine Trägerstruktur der Wirkeinheit C-förmig ausgeführt sein, sodass das ringförmige multiaxiale Fadengelege 2 über die offene Seite der C-förmigen Trägerstruktur aus der Wirkeinheit herausgeführt werden kann. Zum Herausführen des ringförmigen multiaxialen Fadengeleges 2 kann entweder die Wirkeinheit axial zu den Ringelementen 3 bewegt werden oder die Ringelemente 3 werden gegenüber der Wirkeinheit axial bewegt. Bei der Verwendung eines als Bandelement ausgestalteten Unterstützungselementes 14 wird das Bandelement im Bereich der Wirkeinheit abschnittsweise an den Elementen der Wirkeinheit vorbeigeführt, sodass die Innenseite des ringförmigen multiaxialen Fadengeleges 2 im Bereich der Wirkeinheit freiliegt und von der Wirknadel 17 mit dem Schieber durchstochen werden kann (vgl. **Fig. 1****).** Optional kann die abschnittsweise freiliegende Innenseite des ringförmigen multiaxialen Fadengeleges 2 durch (nicht dargestellte) schwenkbare Klappen oder Schieberelemente im Legeprozess geschlossen werden. Beim Ein- und Ausfahren der Wirkstelle muss der Spalt entsprechend groß gewählt sein, oder aber auseinandergefahren werden, um die geschlossenen Nadelkränze kollisionsfrei mit den Wirkelementen passieren zu können.

Mit dem beschriebenen Verfahren lassen sich multiaxiale Gelege 2 in geschlossener Ringform herstellen. Vorzugsweise dient das Verfahren der Herstellung von mehrlagigen multiaxialen Gelegestrukturen mit zusätzlichen Flächenlagen, vorzugsweise Abstandstextilien und vorzugsweise Abstandsgewirken. Als Fadenmaterialien im Schuss-und Stehfadenfaden kommen alle organischen oder anorganischen Endlosfasern wie Polyester, Polyethylen, Polyamid Carbon, Glas, Basalt, Aramid, Cellulose zur Verwendung, als Wirkfaden vorzugsweise Polyester, Polypropylen, Polyamid. Als Stehfadenmaterial kommen auch zusätzlich metallische Fäden oder Litzen aus Stahl, Aluminium zur Verwendung.

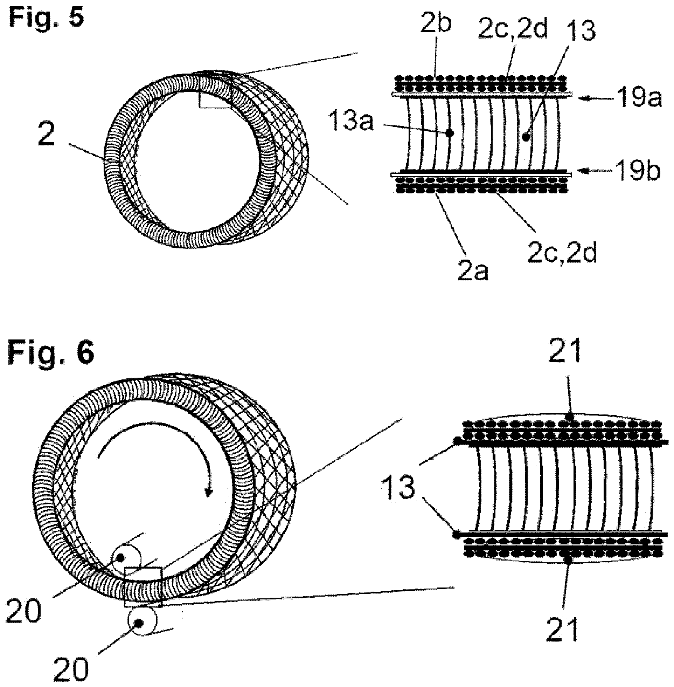

Eine typische Ausführungsvariante ist das Legen von multiaxialen Fadenlagen aus Glasfasern in einem ersten Schritt, dass Ablegen eines Abstandsgewirkes aus Polyester in der Dicke zwischen 2-20 mm, vorzugsweise 5-12 mm, insbesondere 8 mm in einem zweiten Schritt und das wiederholte Ablegen von multiaxialen Fadenlagen aus Glasfasern in einem dritten Schritt. Vorzugsweise sind dabei die oberen und unteren Fadenlagen hinsichtlich der Lagenanzahl, des Flächengewichts und Fasertyps identisch und hinsichtlich ihrer Faserorientierung spiegelsymmetrisch zur Lage des Abstandsgewirkes. In **Fig. 5** ist eine räumliche schematische Darstellung eines ringförmigen multiaxialen Fadengeleges 2 mit als Abstandsgewirke ausgeführtem flächigem Lagematerial 13 gezeigt. Der Schichtaufbau dieses Geleges 2 ist in einer Detaildarstellung näher gezeigt. Das Abstandsgewirke ist auf der Außenseite 19a von der oberen Fadenlage 2b und zwei darunter liegenden weiteren Fadenlagen 2c belegt. Auf der Innenseite 19b des Abstandsgewirkes liegen zwei weitere Fadenlagen 2d und die untere Fadenlage 2a auf. Die Fäden jeweils benachbarter Fadenlagen schließen einen Winkel β von größer 0 Grad ein.

Ein Vorteil dieser Struktur ist, dass die Stoßstelle des Abstandsgewirkes, bei der die beiden Stirnseiten des Abstandsgewirkes in der Ringform aneinanderstoßen und welche in der textilen Gesamtstruktur bei mechanischer Belastung eigentlich eine Schwachstelle darstellt, durch das anschließende Verwirken des gesamten Lagenaufbaus keinen negativen Auswirkungen mehr hat. Weitere vorteilhafte Eigenschaften der so hergestellten ringförmigen Struktur ergeben sich, wenn die multiaxialen Fadenlagen auf der Innen- und Außenseite der ringförmigen Struktur sowie die Außenseiten des Abstandsgewirkes mit Ausnahme der Polfäden 13a des Abstandsgewirkes anschließend in ein polymeres Matrixmaterial eingebettet werden und so eine stoffschlüssige Verbindung eingehen. Das erfindungsgemäße Verfahren sieht dabei in einer Erweiterung vor, dass nach dem punktuellen Fixieren der Fäden der Fadenlagen auf einer Innenseite des ringförmigen multiaxialen Fadengeleges und/oder einer Außenseite des ringförmigen multiaxialen Fadengeleges mit einer Auftragsvorrichtung 20 ein polymeres Matrixmaterial 21 aufgetragen wird (vgl. hierzu **Fig. 6****).** Das polymere Matrixmaterial 21 ist vorzugsweise ein Reaktionsharz, vorzugsweise ein Polyurethan. Vorzugsweise ist die Viskosität des Reaktionsharzes so eingestellt, das die Fasern der multiaxialen Fadenlagen sowie Außenseiten des Abstandsgewirkes vollständig imprägniert sind, die Polfäden 13a des Abstandsgewirkes während des Einbettprozesses jedoch nicht mit in das Reaktionsharzgemisch eingebettet werden. Um ein Eindringen des polymeren Matrixmaterials 21 in das Abstandsgewirke weiter zu unterbinden, kann das Abstandsgewirke einseitig oder beidseitig mit einer Trennfolie belegt sein. Das Abstandsgewirke kann zusammen mit der Trennfolie bereits vorgefertigt als flächiges Lagenmaterial 13 im Legeprozess zwischen die Fadenlagen 2a, 2b eingelegt werden. Ebenso können das Abstandsgewirke und die Trennfolie aber auch nacheinander als jeweils separates flächiges Lagenmaterial 13 im Legeprozess zugeführt werden.

Mit dem erfindungsgemäßen Verfahren werden mehrlagige multiaxiale Ringstrukturen erzeugt, die zur Herstellung verschiedener ringförmiger Gegenstände eingesetzt werden können. Ein möglicher ringförmiger Gegenstand kann ein Kraftfahrzeugreifen (beispielsweise ein luftloser Leichtbaureifen) sein, wobei das ringförmige multiaxiale Fadengelege 2 in dem Reifenmantel integriert ist. Insbesondere bei diesem Einsatzzweck ist das Einbetten der oberen oder unteren Fadenlagen des ringförmigen multiaxialen Fadengeleges in ein polymeres Matrixmaterial vorteilhaft. Zum einen wird der notwendige Faserverstärkungseffekt ausgebildet. Zum anderen wird eine gute stoffliche Anbindung an den aus synthetischen Kautschuk oder Naturkautschuk gebildet Reifenmantel im Vulkanisationsprozess erreicht. Für die Einbettung der Fadenlagen kommt beispielsweise ein leichtfließendes Reaktionsgemisch oder schmelzflüssiger Thermoplast in Frage. Es muss dabei aber je nach Aufbau der textilen Lagenstruktur sichergestellt werden, dass nur eine definierte Lagenanzahl durch den Kunststoff in Dickenrichtung imprägniert wird. Insbesondere in dem bevorzugten textilen Lagenaufbau mit einem Abstandsgewirke als Mittellage und äußeren Lagen aus Multiaxialgelegen soll das Abstandsgewirke nicht mit imprägniert werden, um dessen textile Druckspannungs-Verformungseigenschaften aufrecht zu erhalten. Hierfür dürfen die Polfäden des Abstandsgewirkes nicht mit eingebettet werden, was durch Einlegen von Trennfolien im Legeprozess sichergestellt werden kann. Vorzugsweise werden dünne polymer Folien eingesetzt, die beim Wirken oder Verklammern der Fadenlagen durchstochen werden können. Je nach verwendetem Matrixmaterial können verschiedene thermoplastische Folien eingesetzt werden, die eine gute stoffliche Verbindung mit der Matrix eingehen. Dies können Folien z. B. auf Basis PP, PE, PA6, PA66, TPU, PLA sein. Vorteilhaft erweist sich dabei auch das Verwirken der Folie mit den textilen Lagen, da der Wirkfaden Fließkanäle in Dickenrichtung durch die Folie aufweist, die sich aufgrund der Kapillarkräfte noch leicht mit der Matrix füllen und so die Folie gut mit den umliegenden textilen Lagenschichten lokal fixiert.

Die Fäden der untere Fadenlage 2a und/oder der oberen Fadenlage 2b und/oder der weiteren Fadenlage und/oder der weiteren Fadenlagen und/oder das flächige Lagenmaterial 13 sind vorzugsweise aus Polyamid oder aromatischem Polyamid oder Polyethylenterephthalat oder regenerierter Cellulose oder Metall oder Kohlenstoff oder Glas oder ultrahochmolekularem Polyethylen oder Polypropylen oder Polyacrylnitril oder PBO (poly(p-phenylene-2,6-benzobisoxazole)) oder PBI (Polybenzimidazole) oder PPS (Polyphenylene sulfide) oder organischen Fasern oder Kombinationen hieraus gebildet.

### Bezugszeichenliste

- 1: Multiaxialmaschine
- 2: ringförmiges multiaxiales Fadengelege
- 2a: untere Fadenlage
- 2b: obere Fadenlage
- 2c: weitere Fadenlage
- 2d: weitere Fadenlage
- 3: Ringelement
- 4: Fadenhalteelement
- 5: Zufuhrportal
- 6: Fadenleger
- 7: Fadenspule
- 8: Umfangsrichtung der Ringelemente 3
- 9: Drehachsen der Ringelemente 3
- 10: Fixiereinheit
- 11a: Wirknadeleinheit
- 11b: Wirkfadenzufuhreinheit
- 12: Zuführeinrichtung
- 13: flächiges Lagenmaterial
- 14: Unterstützungselement
- 15: Lochnadeln
- 16: Abschlageplatte
- 17: Wirknadel mit Schieber
- 18: Innenseite des ringförmiges multiaxiales Fadengeleges 2
- 19a: Außenseite des flächigen Lagenmaterials 13
- 19b: Innenseite des flächigen Lagenmaterials 13
- 20: Auftragsvorrichtung
- 21: polymeres Matrixmaterial
- α: Winkel zwischen Fäden einer Fadenlage und Umfangsrichtung 8
- β: Winkel zwischen Fäden benachbarter Fadenlagen

## Patentansprüche

1. Verfahren zur Herstellung eines ringförmigen multiaxialen Fadengeleges (2), welches aus zumindest zwei übereinander abgelegten Fadenlagen (2a, 2b) aufgebaut ist, wobei das Verfahren folgende Schritte umfasst:
a. Vollumfängliches Ablegen einer unteren Fadenlage (2a) in Form einer endlosen Fadenschar oder eines endlosen Einzelfadens oder in Form von Fadenscharabschnitten oder Einzelfadenabschnitten auf zwei beabstandet angeordnete Ringelemente (3), wobei die Fadenschar oder der Einzelfaden oder die Fadenscharabschnitte oder die Einzelfadenabschnitte der unteren Fadenlage nach dem Ablegen von entlang des Ringumfangs angeordneten Fadenhalteelementen (4) vorübergehend gehalten wird und wobei die Fäden der Fadenschar oder der Fadenscharabschnitte oder der Einzelfaden oder die Einzelfadenabschnitte der unteren Fadenlage (2a) gegenüber der Umfangsrichtung (8) der Ringelemente (3) einen Winkel (α) im Bereich von größer 0 Grad bis 90 Grad einschließen,
b. Vollumfängliches Ablegen einer oberen Fadenlage (2b) in Form einer endlosen Fadenschar oder eines endlosen Einzelfadens oder in Form von Fadenscharabschnitten oder Einzelfadenabschnitten auf die zwei beabstandet angeordneten Ringelemente (3), wobei die Fadenschar oder der Einzelfaden oder die Fadenscharabschnitte oder die Einzelfadenabschnitte der oberen Fadenlage (2b) nach dem Ablegen von den entlang des Ringumfangs angeordneten Fadenhalteelementen (4) vorübergehend gehalten wird und wobei die Fäden der Fadenschar oder der Einzelfaden oder die Fadenscharabschnitte oder die Einzelfadenabschnitte der oberen Fadenlage (2b) gegenüber den Fäden der Fadenschar oder dem Einzelfaden oder den Fadenscharabschnitte oder den Einzelfadenabschnitte der unteren Fadenlage (2a) einen Winkel (β) von größer 0 Grad einschließen,
c. Punktuelles Fixieren der Fäden der Fadenschar oder des Einzelfadens oder der Fadenscharabschnitte oder der Einzelfadenabschnitte der unteren Fadenlage (2a) mit den Fäden der Fadenschar oder dem Einzelfaden oder der Fadenscharabschnitte oder der Einzelfadenabschnitte der oberen Fadenlage (2b) mittels Fixiereinheit (10) entlang des Umfangs der ringförmig gelegten unteren und oberen Fadenlage (2a, 2b),
d. Lösen der unteren und der oberen Fadenlage (2a, 2b) von den Fadenhalteelementen (4),
e. Abnehmen des ringförmigen multiaxialen Fadengeleges (2) von den beabstandeten Ringelementen (3).

2. Verfahren nach Anspruch 1, **dadurch gekennzeichnet, dass** zwischen der unteren und der oberen Fadenlage (2a, 2b) zumindest eine weitere Fadenlage (2c, 2d) in Form einer endlosen Fadenschar oder eines endlosen Einzelfadens oder in Form von Fadenscharabschnitten oder Einzelfadenabschnitten auf die zwei beabstandet angeordneten Ringelemente (3) vollumfänglich abgelegt wird, wobei die Fadenschar oder der Einzelfaden oder die Fadenscharabschnitte oder die Einzelfadenabschnitte der weiteren Fadenlage (2c, 2d) nach dem Ablegen von den entlang des Ringumfangs (3) angeordneten Fadenhalteelementen (4) vorübergehend gehalten wird und wobei die Fäden der Fadenschar oder der Einzelfaden oder die Fadenscharabschnitte oder die Einzelfadenabschnitte der weiteren Fadenlage (2c, 2d) gegenüber den Fäden der Fadenschar oder dem Einzelfaden oder der Fadenscharabschnitte oder der Einzelfadenabschnitte der unteren und oberen Fadenlage (2a, 2b) einen Winkel von größer 0 Grad einschließen.

3. Verfahren nach Anspruch 2, **dadurch gekennzeichnet, dass** zwischen der unteren und der oberen Fadenlage (2a, 2b) zwei oder mehr weitere Fadenlagen (2c, 2d) abgelegt werden, wobei die Fäden der Fadenschar oder der Einzelfaden oder der Fadenscharabschnitte oder der Einzelfadenabschnitte der weiteren Fadenlagen (2c, 2d) gegenüber den Fäden der Fadenschar oder dem Einzelfaden oder der Fadenscharabschnitte oder der Einzelfadenabschnitte der jeweils benachbarten Fadenlagen (2a, 2b, 2c, 2d) einen Winkel von größer 0 Grad einschließen.

4. Verfahren nach einem der vorgenannten Ansprüche, **dadurch gekennzeichnet, dass** nach dem Ablegen der unteren Fadenlage (2a) oder nach dem Ablegen der weiteren Fadenlage (2c, 2d) oder nach dem Ablegen der oberen Fadenlage (2b) vollumfänglich ein flächiges Lagenmaterial (13) oder eine Stehfadenschicht aufgelegt wird.

5. Verfahren nach einem der vorgenannten Ansprüche, **dadurch gekennzeichnet, dass** nach dem punktuellen Fixieren der Fäden der Fadenlagen (2a, 2b, 2c, 2d) auf einer Innenseite des ringförmigen multiaxialen Fadengeleges (2) und/oder einer Außenseite des ringförmigen multiaxialen Fadengeleges (2) ein polymeres Matrixmaterial aufgetragen wird.

6. Multiaxialmaschine (1) zur Herstellung eines ringförmigen multiaxialen Fadengeleges (2), **dadurch gekennzeichnet, dass** die Multiaxialmaschine (1) zwei beabstandete und zueinander lagefixierte Ringelemente (3) mit entlang des Ringumfangs angeordneten Fadenhalteelementen (4), zumindest einen an einem ersten Zufuhrportal (5) geführten und von einer ersten Fadenzufuhr versorgten ersten Fadenleger (6) zur Ablage zumindest einer unteren Fadenlagen (2a) und einer oberen Fadenlage (2b) in Form einer endlosen Fadenschar oder eines endlosen Einzelfadens oder in Form von Fadenscharabschnitten oder Einzelfadenabschnitte auf die zwei beabstandet angeordneten Ringelementen (3) und eine Fixiereinheit (10) zur lokalen Fixierung der Fäden der auf den Ringelementen abgelegten unteren und oberen Fadenlage (2a, 2b) aufweist und dass der ersten Fadenleger (6) an dem ersten Zufuhrportal (5) quer zur Umfangsrichtung (8) der Ringelemente (3) zwischen den Ringelementen (3) hin- und herbewegbar ist und dass das erste Zufuhrportal (5) und die zueinander lagefixierten Ringelemente (3) entlang der Umfangsrichtung (8) gegeneinander verdrehbar sind.

7. Multiaxialmaschine (1) nach Anspruch 6, **dadurch gekennzeichnet, dass** diese zumindest einen an einem zweiten Zufuhrportal geführten und von einer zweiten Fadenzufuhr versorgten zweiten Fadenleger zur Ablage einer weiteren Fadenlage (2c, 2d) in Form einer endlosen Fadenschar oder eines endlosen Einzelfadens oder in Form von Fadenscharabschnitten oder Einzelfadenabschnitten auf die zwei beabstandet angeordnete Ringelemente aufweist und dass der zweite Fadenleger an dem zweiten Zufuhrportal quer zur Umfangsrichtung (8) der Ringelemente (3) zwischen den Ringelementen (3) hin- und herbewegbar ist und dass das zweite Zufuhrportal und die zueinander lagefixierten Ringelemente (3) entlang der Umfangsrichtung (8) gegeneinander verdrehbar sind.

8. Multiaxialmaschine (1) nach einem der Ansprüche 6 bis 7, **dadurch gekennzeichnet, dass** diese eine Zuführeinrichtung (12) zur Zuführung und Ablage eines flächigen Lagenmaterials (13) auf der Fadenlage (2a, 2b) und/oder der weiteren Fadenlage (2c, 2d) aufweist.

9. Multiaxialmaschine (1) nach einem der Ansprüche 6 bis 8, **dadurch gekennzeichnet, dass** diese zwischen den beiden beabstandeten Ringelementen (3) entlang des Ringumfangs zumindest abschnittsweise ein Unterstützungselement (14) zur Stützung der auf den Ringelementen (3) abgelegten unteren Fadenlage (2a) vorgesehen ist.

10. Multiaxialmaschine (1) nach Anspruch 9, **dadurch gekennzeichnet, dass** das Unterstützungselement (14) ein zumindest abschnittsweise entlang des Ringumfangs umlaufendes Bandelement ist.

11. Multiaxialmaschine (1) nach einem der Ansprüche 6 bis 10, **dadurch gekennzeichnet, dass** die Ringelemente (3) eine kreisförmige oder ovale oder elliptische Außenkontur oder eine Außenkontur in Form eines regelmäßigen Polygons aufweisen.

12. Multiaxialmaschine (1) nach einem der Ansprüche 6 bis 11, **dadurch gekennzeichnet, dass** die Fadenhalteelemente (4) Nadeln sind, die entlang der Ringelemente jeweils einen Nadelkranz (3) bilden oder dass die Fadenhalteelemente (4) entlang der Ringelemente (3) angeordnete Klemmelemente sind.

13. Ringförmiger Gegenstand, **dadurch gekennzeichnet, dass** dieser ein mit dem Verfahren gemäß einem der Ansprüche 1 bis 5 hergestelltes ringförmiges multiaxiales Fadengelege (2) enthält.

14. Ringförmiger Gegenstand gemäß Anspruch 13, **dadurch gekennzeichnet, dass** die Fäden der untere Fadenlage (2a) und/oder der oberen Fadenlage (2b) und/oder der weiteren Fadenlage (2c, 2d) und/oder der weiteren Fadenlagen (2c, 2d) und/oder das flächige Lagenmaterial (13) aus Polyamid oder aromatischem Polyamid oder Polyethylenterephthalat oder regenerierter Cellulose oder Metall oder Kohlenstoff oder Glas oder ultrahochmolekularem Polyethylen oder Polypropylen oder Polyacrylnitril oder PBO (poly(p-phenylene-2,6-benzobisoxazole)) oder PBI (Polybenzimidazole) oder PPS (Polyphenylene sulfide) oder organischen Fasern oder Kombinationen hieraus gebildet sind.

15. Ringförmiger Gegenstand nach Anspruch 13 oder 14, **dadurch gekennzeichnet, dass** dieser Gegenstand ein Fahrzeugreifen ist und dass das ringförmige multiaxiale Fadengelege (2) in dem Reifenmantel integriert ist.
